# EUROPÄISCHE PATENTANMELDUNG

(11) **EP 1 544 511 A2**
(43) Veröffentlichungstag der Anmeldung: **22.06.2005**
(21) Anmeldenummer: 04029151.0
(22) Anmeldetag: 09.12.2004
(51) Int. Cl.: F16H 59/02

(54) **Vorrichtung zum manuellen Schalten eines Automatikgetriebes**

(30) Priorität: 19.12.2003 DE 10360594
(71) Anmelder: Pantel Elektronik GmbH, 91058 Erlangen (DE)
(72) Erfinder: Stolz, Klaus, 91086 Aurachtal (DE)
(74) Vertreter: Gassner, Wolfgang, Dr.

(57) **Zusammenfassung**

Die Erfindung betrifft eine Vorrichtung zum manuellen Schalten eines Automatikgetriebes mit mindestens einem entlang einer Bewegungsbahn (2) von einer Mittelstellung in eine erste (T+) oder eine zweite Schaltstellung (T-) bewegbaren mehrpoligen Magnetanordnung (1) und mindestens drei im Wirkbereich der Magnetanordnung (1) angeordneten Hallsensoren (H1, H2, H3, H4). Um eine möglichst sichere Erfassung einer Schaltstellung zu gewährleisten, wird erfindungsgemäß vorgeschlagen, dass die Hallsensoren (H1, H2, H3, H4) bezüglich der Bewegungsbahn (2) der Magnetanordnung (1) so angeordnet sind, dass eine von einer Mittelstellung abweichende erste (T+) oder zweite Schaltstellung (T-) zumindest zweifach erfassbar ist.

## Beschreibung

Die Erfindung betrifft eine Vorrichtung zum manuellen Schalten eines Automatikgetriebes nach dem Oberbegriff des Anspruchs 1.

Moderne Automatikgetriebe können auch in einer manuellen Betriebsweise betrieben werden. Zum Schalten wird der Schalthebel nach Art eines Tasters kurzzeitig aus einer Mittelstellung nach vorne oder nach hinten bewegt. Die manuelle Betriebsweise des Automatikgetriebes wird üblicherweise in Fahrsituationen gewählt, in denen die vorgegebene Charakteristik des Automatikbetriebs nicht optimal ist, z. B. bei Überholmanövern oder bei Bergabfahrten.

Eine gattungsgemäße Vorrichtung ist aus der EP 1 061 290 B1 bekannt. Bei der bekannten Vorrichtung ist zur Erfassung einer Schaltposition eines Schalthebels ein vierpoliger Magnet vorgesehen, der bezüglich einer aus vier gitterartig angeordneten Hallsensoren gebildeten Matrix bewegbar ist. Die Pole des Magneten sind so angeordnet, dass jede Schaltposition des Schalthebels eine andere Kombination von Ein/Aus Zuständen der Hallsensoren bewirkt. Daraus kann jede Schaltposition eindeutig identifiziert werden. - Wenn es insbesondere bei der manuellen Betriebsweise zu einem Ausfall einer der Hallsensoren kommt, kann u. U. eine Schaltbewegung unerkannt bleiben. In diesem Fall steht eine vom Fahrer erwartete Beschleunigungs- oder Verzögerungswirkung des Getriebes unerwarteterweise nicht zur Verfügung. Das kann insbesondere bei Überholmanövern oder Bergabfahrten zu Gefahrensituationen mit unübersehbaren Folgen führen.

Aus der EP 1 003 985 B1 ist eine Manövriervorrichtung bekannt, bei der entlang einer gekrümmten Bewegungsbahn mehrere Hallsensoren angeordnet sind, an der eine Magnetanordnung zur Erzeugung eines Schaltcodes vorbei geführt wird. Die vorgeschlagene Manövriervorrichtung ist nicht besonders kompakt aufgebaut. Mit der Zeit erweitert sich das Spiel einer drehbar um eine Achse aufgenommenen Platine, welche die Magnetanordnung trägt. Infolge dessen kann es dazu kommen, dass eine Schaltbewegung oder -stellung nicht erkannt wird.

Die EP 1 363 047 A2 offenbart eine Schaltvorrichtung zum Schalten des Getriebes eines Fahrzeugs. Zur Erkennung einer Schaltstellung sind dabei jeweils eine Gruppe von Hallsensoren vorgesehen. Die vorgeschlagene Schaltvorrichtung ist relativ kompliziert aufgebaut. Sie erfordert die Bereitstellung einer Vielzahl von Hallsensoren sowie einer geeigneten aufwändigen Schaltung zur Auswertung der davon gelieferten Signale.

Aus der DE 196 53 193 A1 ist eine Anordnung zur Erfassung der Stellung eines Wählhebels oder Schalthebels in einem Kraftfahrzeug bekannt. Dabei wird ein sechsstelliges Bitmuster erzeugt, mit dem eine Schaltstellung redundant erfassbar ist. Zur Erzeugung des Bitmusters wird ein Positionserkennungsschalter mit einer daran vorgesehenen Kontaktplatte über mehrgliedrige Kontaktfedern hin- und herbewegt. Bei der vorgeschlagene Anordnung verschleißen die Kontaktelemente.

Aufgabe der Erfindung ist es, die Nachteile nach dem Stand der Technik zu beseitigen. Es soll insbesondere eine Vorrichtung zum manuellen Schalten eines Automatikgetriebes angegeben werden, mit der sicher und zuverlässig eine Schaltstellung auch dann erkannt werden kann, wenn einer der Hallsensoren ausfällt. Nach einem weiteren Ziel der Erfindung soll die Vorrichtung möglichst einfach und kostengünstig herstellbar sein.

Diese Aufgabe wird durch die Merkmale des Anspruchs 1 gelöst. Zweckmäßige Ausgestaltungen ergeben sich aus den Merkmalen der Ansprüche 2 bis 13.

Nach Maßgabe der Erfindung ist vorgesehen, dass die Hallsensoren bezüglich der Bewegungsbahn der Magnetanordnung so angeordnet sind, dass eine von einer Mittelstellung abweichende erste oder zweite Schaltstellung zumindest zweifach erfassbar ist. - Damit wird sichergestellt, dass auch bei einem Ausfall einer der Hallsensoren die Schaltstellung mit dem verbleibenden Hallsensoren sicher und zuverlässig erfasst wird. Die vorgeschlagene Vorrichtung ist relativ einfach aufgebaut. Zur zweifachen Erfassung der Schaltstellung sind lediglich mindestens drei Hallsensoren erforderlich.

Nach einer vorteilhaften Ausgestaltung ist eine von der Mittelstellung in die erste oder zweite Schaltstellung erfolgende Schaltbewegung zumindest zweifach erfassbar. Bereits die redundante Erfassbarkeit einer Schaltbewegung erhöht weiter die Sicherheit und Zuverlässigkeit der vorgeschlagenen Vorrichtung. Es kann insbesondere erkannt werden, ob eine Schaltbewegung vollständig ausgeführt worden ist. Falls das nicht der Fall ist, kann eine Fehlermeldung erfolgen.

Nach einer vorteilhaften Ausgestaltung ist die Bewegungsbahn eine lineare Bewegungsbahn. Unter einer "linearen Bewegungsbahn" wird im Sinne der vorliegenden Erfindung eine Bewegungsbahn verstanden, bei der die Magnetanordnung auf einem geraden Weg hin und her bewegbar ist. Der Weg ist fest vorgegeben. Es findet insbesondere keine Bewegung der Magnetanordnung quer oder schräg zu dem Weg statt. Das ermöglicht eine besonders einfache Ausführung der Vorrichtung. Die Bewegungsbahn kann insbesondere eine horizontale Bewegungsbahn sein. Das ermöglicht einen besonders kompakten Aufbau der Vorrichtung.

Zweckmäßigerweise weist die Magnetanordnung zumindest zwei, vorzugsweise drei, parallel zur Bewegungsbahn langgestreckt ausgebildete Schaltmagneten in nebeneinander liegender Anordnung auf. Ein erster Hallsensor kann im Wirkbereich einer aus zwei ersten Schaltmagneten gebildeten ersten Spur der Magnetanordnung, ein zweiter Hallsensor im Bereich einer aus zwei zweiten Schaltmagneten gebildeten zweiten Spur der Magnetanordnung und ein dritter Hallsensor im Wirkbereich einer aus zwei dritten Schaltmagneten gebildeten dritten Spur der Magnetanordnung angeordnet sein. Dabei können die Pole der Schaltmagneten versetzt zueinander angeordnet und die den Schaltmagneten zugeordneten Hallsensoren in einer senkrecht zur Bewegungsrichtung sich erstreckenden Reihe angeordnet sein. Als besonders zweckmäßig hat es sich erwiesen, dass ein Versatz der Schaltmagnete so gewählt ist, dass die Pole in einer parallel zur Bewegungsbahn verlaufenden Richtung abschnittsweise überlappen. Das ermöglicht eine besonders kompakte Ausgestaltung der Vorrichtung.

Alternativ dazu können die Hallsensoren in Bewegungsrichtung versetzt zueinander angeordnet und die Pole der diesen Hallsensoren zugeordneten Schaltmagnete in einer senkrecht zur Bewegungsbahn sich erstreckenden Reihe angeordnet sein.

Nach einem weiteren Ausgestaltungsmerkmal ist vorgesehen, dass im Wirkbereich jeder der Schaltmagnete zumindest einer der Hallsensoren angebracht ist. Es ist insbesondere auch möglich, dass im Wirkbereich einer der Schaltmagnete zwei Hallsensoren vorgesehen sind.

Die Hallsensoren können derart im Wirkbereich der Schaltmagneten angeordnet sein, dass die Schaltbewegung von der Mittelstellung in die erste oder die zweite Schaltstellung dreifach erfassbar ist. Es kann sich dabei um diejenige Schaltstellung handeln, welche ein Herunterschalten in den nächst niedrigeren Gang bewirkt. Nach der vorgeschlagenen Ausführung kann ein solches Herunterschalten dreifach erfasst werden, d. h. auch bei einem Ausfall von zwei Hallsensoren kann diese hoch sicherheitsrelevante Schaltfunktion immer noch sicher und zuverlässig erkannt werden.

Nach einer weiteren Ausgestaltung ist eine die Hallsensoren aufnehmende Platine in einem Gehäuse aufgenommen, an dem ein den Magneten aufnehmendes linear verschiebbares Gleitelement angebracht ist. In dieser Ausgestaltung ist die Vorrichtung zweckmäßigerweise als Modul ausgebildet.

Ein Abstand zwischen der Mittelstellung und der ersten und/oder zweiten Schaltstellung kann höchstens 20 mm, vorzugsweise höchstens 10 mm, betragen. In dieser Ausgestaltung kann die Vorrichtung besonders flach und kompakt ausgeführt werden.

Nach einer weiteren Ausgestaltung ist ein elastisches Mittel zum Zwingen des Gleitelements in die Mittelstellung vorgesehen. Damit wird in vorteilhafter Weise eine weitere Funktion in die Vorrichtung integriert. An der Platine angebrachte Kontaktelemente können zumindest einen im Gehäuse vorgesehenen Durchbruch zum Anschluss eines Steckers durchgreifen.

Nachfolgend werden Ausführungsbeispiele der Erfindung anhand der Zeichnungen näher erläutert. Es zeigen:
- Fig. 1: die Anordnung der Pole eines Magneten,
- Fig. 2: die Anordnung von Hallsensoren auf einer Platine,
- Fig. 3: eine Logiktabelle zu den Schaltzuständen der Anordnung gemäß den Fig. 1 und 2,
- Fig. 4: eine weitere Logiktabelle zu den Schaltzuständen der Anordnung gemäß den Fig. 1 und 2,
- Fig. 5: eine erste Schaltung und
- Fig. 6: eine zweite Schaltung.

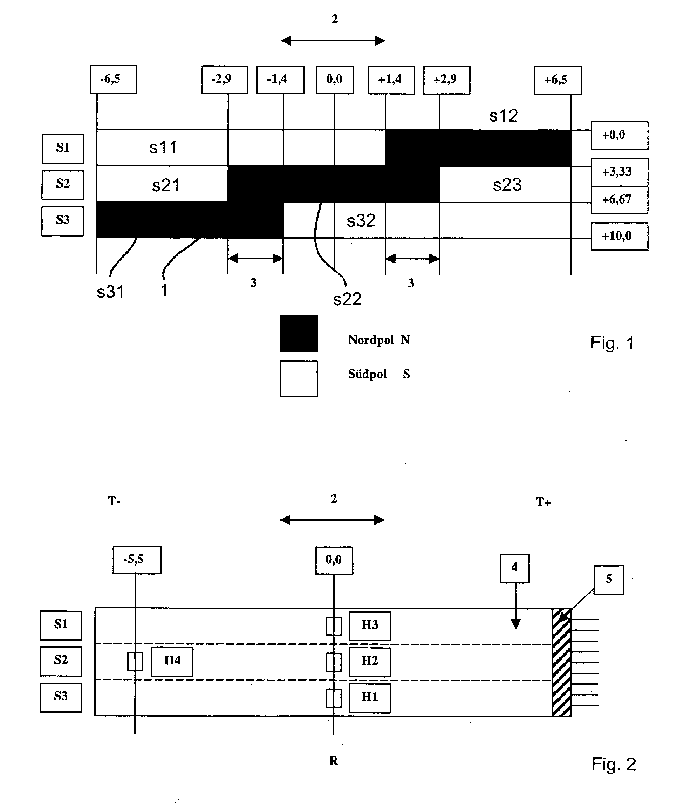

Fig. 1 zeigt eine Draufsicht auf eine Magnetanordnung 1. Die Magnetanordnung 1 ist hier einstückig aus einem magnetischen Material, z. B. aus einem Kunststoff gebundenen Keramikwerkstoff, hergestellt. Derartige Werkstoffe werden beispielsweise unter den Produktbezeichnungen "KOEROX 15/19 PA" von der Firma Magnequench GmbH oder unter der Produktbezeichnung "Feplast 11/24 P1" von der Firma Peter Welter GmbH & Co. KG vertrieben. Das Material ist so magnetisiert, dass es in der mit dem Pfeil 2 bezeichneten Bewegungsbahn bzw. -richtung der Magnetanordnung 1 mehrere Spuren S1, S2, S3 aufweist, die parallel zur Bewegungsbahn 2 verlaufen. Die beiden äußeren Spuren S1 und S3 sind zweckmäßigerweise jeweils 2-polig ausführt. Die mittlere Spur S2 weist zweckmäßigerweise 3 Pole auf. Die einen Nordpol N bildenden Bereiche der Spuren S1, S2, S3 sind jeweils schwarz und die einen Südpol S bildenden Bereiche jeweils weiß dargestellt. Bei den beiden äußeren Spuren S1 und S3 erstreckt sich der Südpol S jeweils von einer kurzen Seite der Magnetanordnung 1 über mehr als 50%, vorzugsweise 60%, der Gesamtlänge der jeweiligen Spur S1, S2, S3. Der Rest der äußeren Spuren S1 und S3 wird aus einem Nordpol N gebildet. Die Nordpole N sind in Bewegungsrichtung 2 einander gegenüberliegend angeordnet. Bei der mittleren Spur S2 ist der Nordpol N symmetrisch in der Mitte angeordnet, die Südpole S erstrecken sich jeweils von den kurzen Seiten der Magnetanordnung 1 bis zum Nordpol N.

Die Nordpole N sind in den Spuren S1, S2 und S3 jeweils versetzt angeordnet. Sie sind in ihrer Länge so gewählt, dass sie sich in einer Richtung senkrecht zur Bewegungsbahn 2 überlappen. Die Überlappungsbereiche sind mit den Pfeilen 3 gekennzeichnet.

Die auf den Spuren S1, S2 und S3 realisierte Polanordnung entspricht einer Kombination mehrerer Schaltmagneten: Die erste Spur S1 umfasst zwei erste Schaltmagneten s11, s12, die zweite Spur S2 umfasst drei zweite Schaltmagneten s21, s22, s23 und die dritte Spur S3 umfasst zwei dritte Schaltmagneten s31 und s32.

Die in Fig. 1 gemachten Zahlenangaben betreffen Längenangaben in mm. Die gezeigte Magnetanordnung 1 weist also eine Länge von 13 mm und eine Breite von 10 mm auf.

Fig. 2 zeigt eine Draufsicht auf eine Platine 4. In der senkrecht zur Bewegungsbahn 2 verlaufenden Richtung sind in einer Reihe R drei Hallsensoren H1, H2, H3 angeordnet. Im Montagezustand der Vorrichtung ist die Magnetanordnung 1 entlang der Bewegungsbahn 2 hin- und herbewegbar über der Platine 4 angebracht. Die im Montagezustand sich ergebenden Wirkbereiche der Schaltmagneten s11, s12, s21, s22, s23, s31, s32 sind in der Fig. 2 mit unterbrochenen Linien kenntlich gemacht. Bei der vorgeschlagenen Vorrichtung ist die Magnetanordnung 1 bezüglich der Hallsensoren H1, H2, H3 lediglich parallel zur Bewegungsbahn 2, nicht jedoch senkrecht dazu, bewegbar. Mit T+ ist eine erste Schaltstellung bezeichnet, in der ein Heraufschalten in den nächst höheren Gang und mit T- eine zweite Schaltstellung, in der ein Herunterschalten in den nächst niedrigeren Gang bewirkt wird. Wie aus Fig. 2 ersichtlich ist, ist jeder Spuren S1, S2, S3 genau einer der in der Reihe R angeordneten Hallsensoren H1, H2, H3 zugeordnet. Dem ersten H1 und dem dritten Hallsensor H3 ist jeweils eine zwei Pole aufweisende Spur S1, S3 zugeordnet. Der zweite Hallsensor H2 ist der zweiten dreipolig ausgebildeten Spur S2 zugeordnet. In der Bewegungsbahn des zweiten Spur S2 kann neben dem zweiten Hallsensor H2 weiterhin ein vierter Hallsensor H4 vorgesehen sein. An einer kurzen Seite der Platine 4 befindet sich eine Steckerleiste 5.

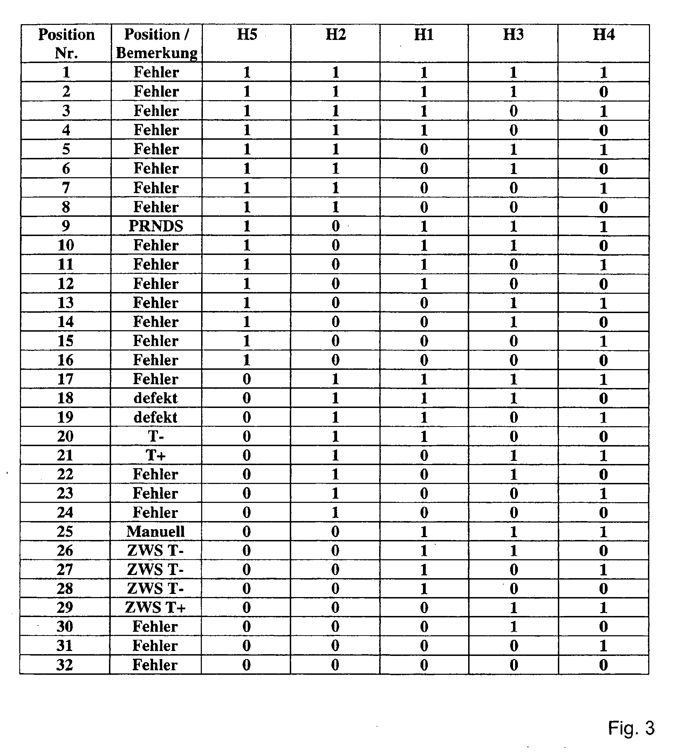

Fig. 3 zeigt eine mit der in den Fig. 1 und 2 gezeigten Vorrichtung erzeugbare Logiktabelle. Sie eignet sich zum Schalten eines Automatikgetriebes, welches einen Automatik- und einen manuellen Schaltbetrieb ermöglicht. Ein in der Logiktabelle ausgewiesener fünfter Hallsensor H5 zeigt an, ob das Automatikgetriebe im automatischen oder im manuellen Schaltbetrieb betrieben wird. Die Positionen Nr. 1 bis 16 betreffen den automatischen Schaltbetrieb, die Positionen Nr. 17 bis 32 den manuellen Schaltbetrieb. Die folgenden Ausführungen beziehen sich lediglich auf den hier interessierenden manuellen Schaltbetrieb.

Ein Heraufschalten in einen nächst höheren Gang ist mit T+, ein Herunterschalten in einen nächst niedrigeren Gang mit T-bezeichnet. Zum Erzeugen der Schaltsignale wird der Magnet 1 parallel zur Bewegungsrichtung 2 über die Platine 4 verschoben, und zwar um einen Weg, welcher etwa der Hälfte der Gesamtlänge des Schaltmagneten 1 entspricht. Im vorliegenden Fall weist der Weg eine Länge von etwa 6,5 mm auf. Infolge der Verschiebung des Magneten 1 aus einer 0-Stellung in Richtung "T+" bzw. "T-" werden mittels der Hallsensoren H1 bis H4 durch die Wirkung der in den Spuren S1, S2, S3 angeordneten Pole bestimmte Signale erzeugt. Sofern ein Hallsensor H1 bis H4 im Wirkbereich eines Nordpols N sich befindet, wird durch diesen Hallsensor H1 bis H4 das Signal "0" erzeugt, befindet er sich im Wirkbereich eines Südpols, wird das Signal "1" erzeugt. Den mit dem Hallsensor H1 bis H4 erzeugbaren Signalkombinationen können den aus der Fig. 3 ersichtlichen folgenden Funktionen zugewiesen werden:
- H4: defekt
- H3: defekt
- T-: (= Magnet befindet sich in der Schaltposition T-)
- T+: (= Magnet befindet sich in der Schaltposition T+)
- Fehler manuell: (= 0-Stellung)
- ZWS T-: (= Zwischenzustand bei der Schaltbewegung in Richtung T-)
- ZWS T+: (= Zwischenzustand bei der Schaltbewegung in Richtung T+)

Die Funktion der Vorrichtung ist folgende:

In der Position Nr. 25 "manuell" befindet sich der Magnet 1 in der 0- bzw. Mittelstellung. In dieser Stellung ist der Magnet 1 bezüglich der Platine 4 so angeordnet, dass die Hallsensoren H1, H3 und H4 jeweils im Wirkbereich eines Südpol S sind. Infolgedessen liefern die vorgenannten Hallsensoren H1, H3 und H4 das Signal "1". Der zweite Hallsensor H2 befindet sich im Wirkbereich des mittig in der zweiten Spur S2 angeordneten Nordpols N. Infolgedessen liefert der zweite Hallsensor H2 das Signal "0". Die von den Hallsensoren H1 bis H4 gelieferten Signalkombinationen für die Schaltstellungen "T+" und "T-" ergeben sich in gleicher Weise.

Bemerkenswert bei der vorgeschlagenen Vorrichtung ist, dass damit nicht nur die Schaltstellung bei Erreichen des Zustands "T+" oder "T-" erfassbar sind, sondern auch Zwischenzustände ZWS erfasst werden, welche durch eine Schaltbewegung in Richtung "T+" oder "T-" hervorgerufen werden. Wie aus Fig. 3 ersichtlich ist, wird bei der vorgeschlagenen Vorrichtung insbesondere eine Schaltbewegung in Richtung "T-" durch drei unterschiedliche Signalkombinationen "ZWS T-" (Position Nr. 26 bis 28) erfasst. In ähnlicher Weise wird auch eine Schaltbewegung in Richtung des Schaltzustands "T+" über den Zwischenzustand "ZWS T+" (Position Nr. 29) erfasst. D. h., mit der vorgeschlagenen Vorrichtung wird nicht nur das Erreichen einer bestimmten Schaltstellung "T+" oder "T-" erfasst, sondern auch die Schaltbewegung in Richtung der vorgenannten Schaltzustände. Eine Auswertung der Zwischenzustände "ZWS" ermöglicht auch bei einem Ausfall einer der Hallsensoren H1 bis H4 insbesondere noch das Erkennen einer Bewegung des Magneten 1 in Richtung der Schaltstellung "T-". Damit kann in vorteilhafter Weise vermieden werden, dass beim Ausfall einer der Hallsensoren H1 bis H4 eine Schaltbewegung in Richtung der Schaltstellung "T-" unerkannt bleibt. Auch in diesem Fall kann mit der vorgeschlagenen Vorrichtung ein der Schaltstellung T- entsprechendes Herunterschalten um einen Gang bewirkt werden.

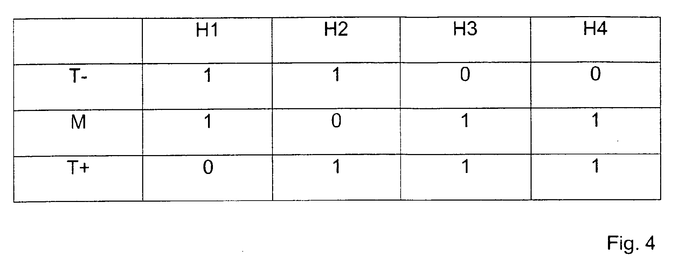

In Fig. 4 ist eine weitere Logiktabelle wiedergegeben. Es handelt sich dabei um eine vereinfachte Ausführung der in Fig. 3 gezeigten Logiktabelle. Die weitere Logiktabelle dient einer einfachen redundanten Auswertung der ersten und zweiten Schaltstellung. Es ist ersichtlich, dass bei einem Ausfall einer der Hallsensoren H1, H2, H3 oder H4 jeweils eine erste oder zweite Schaltstellung immer noch sicher identifizierbar ist. Das auch bei einem Ausfall einer der Hallsensoren H1, H2, H3 oder H4 verbleibende Bitmuster ist für die Schaltstellung eindeutig. Zur Verifizierung der in Fig. 4 gezeigten Logiktabelle ist es selbstverständlich auch möglich, dass die Hallsensoren H1, H2, H3 und H4 zumindest teilweise versetzt zueinander angeordnet und die Schaltmagneten S1, S2 und S3 ebenfalls zumindest teilweise versetzt zueinander angeordnet sind.

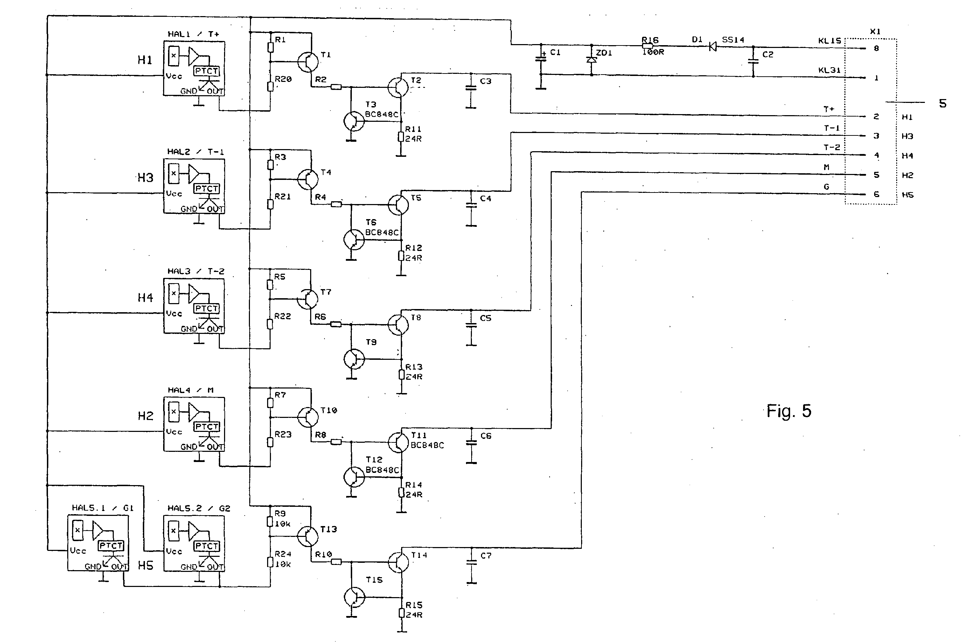

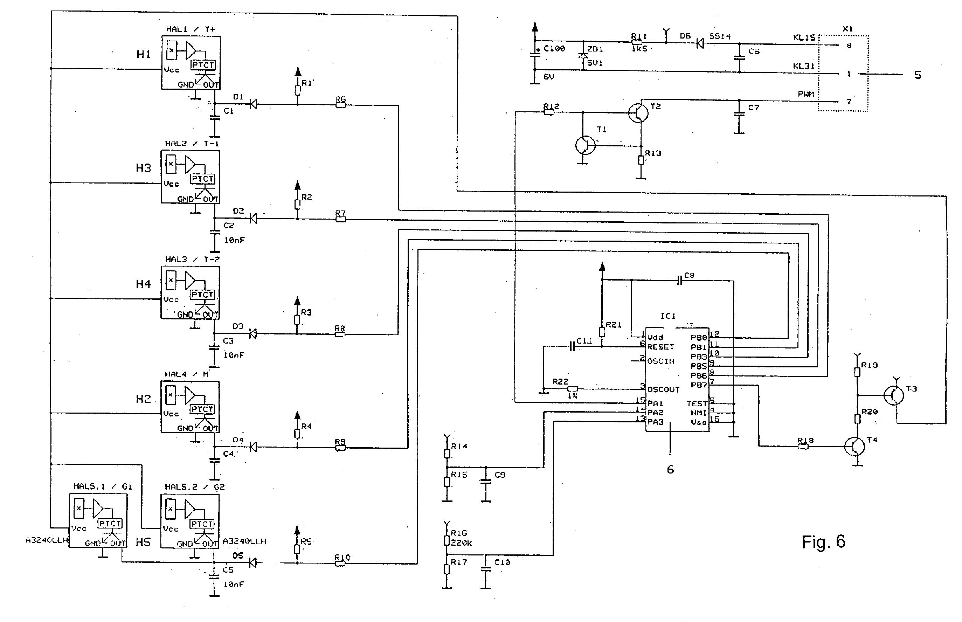

Die Fig. 5 und 6 zeigen beispielhaft Schaltungsvarianten, mit denen die erfindungsgemäße Vorrichtung realisiert werden kann. In Fig. 4 sind die Hallsensoren wiederum mit dem Bezugszeichen H1 bis H5 bezeichnet. Sie sind jeweils über herkömmliche Verstärkerschaltungen mit dazu korrespondierenden Ausgängen an der Steckerleiste 5 verbunden.

Bei der in Fig. 6 gezeigten Variante werden die von den Hallsensoren H1 bis H5 gelieferten Signale unmittelbar mittels eines Mikroprozessors 6 ausgewertet und dann in geeigneter aufbereiteter Form über die Steckerleiste 5 an eine nachgeschaltete (hier nicht gezeigte) Elektronik weitergegeben.

### Bezugszeichenliste

- 1: Magnet
- 2: Bewegungsbahn
- 3: Überlappungsbereich
- 4: Platine
- 5: Steckerleiste
- 6: Mikroprozessor

- H1: erster Hallsensor
- H2: zweiter Hallsensor
- H3: dritter Hallsensor
- H4: vierter Hallsensor
- H5: fünfter Hallsensor
- R: Reihe
- S1: erste Spur
- S2: zweite Spur
- S3: dritte Spur
- s11, s12, s21, s22, s23, s31, s32: Schaltmagneten
- T+: erste Schaltstellung
- T-: zweite Schaltstellung

## Patentansprüche

1. Vorrichtung zum manuellen Schalten eines Automatikgetriebes
mit einer entlang einer linearen Bewegungsbahn (2) von einer Mittelstellung in eine erste (T+) oder eine zweite Schaltstellung (T-) bewegbaren mehrpoligen Magnetanordnung (1)
und mindestens drei im Wirkbereich der Magnetanordnung (1) angeordneten Hallsensoren (H1, H2, H3, H4),
**dadurch gekennzeichnet, dass**
die Hallsensoren (H1, H2, H3, H4) bezüglich der Bewegungsbahn (2) der Magnetanordnung (1) so angeordnet sind, dass eine von einer Mittelstellung abweichende erste (T+) oder zweite Schaltstellung (T-) zumindest zweifach erfassbar ist.

2. Vorrichtung nach Anspruch 1, wobei eine von der Mittelstellung in die erste (T+) oder zweite Schaltstellung (T-) erfolgende Schaltbewegung zumindest zweifach erfassbar ist.

3. Vorrichtung nach einem der vorhergehenden Ansprüche, wobei die Magnetanordnung (1) zumindest drei parallel zur Bewegungsbahn (2) langgestreckt ausgebildete Schaltmagneten (s11, s12, s21, s22, s23, s31, s32) in nebeneinander liegender Anordnung aufweist.

4. Vorrichtung nach einem der vorhergehenden Ansprüche, wobei ein erster Hallsensor (H1) im Wirkbereich einer aus zwei ersten Schaltmagneten (s11, s12) gebildeten ersten Spur (S1) der Magnetanordnung (1), ein zweiter Hallsensor (H2) im Wirkbereich einer aus drei zweiten Schaltmagneten (s21, s22, s23) gebildeten zweiten Spur (S2) der Magnetanordnung (1) und ein dritter Hallsensor (H3) im Wirkbereich einer aus zwei dritten Schaltmagneten (s31, s32) gebildeten dritten Spur (S3) der Magnetanordnung (1) angeordnet sind.

5. Vorrichtung nach einem der vorhergehenden Ansprüche, wobei die Pole (N, S) der Schaltmagneten (s11, s12, s21, s22, s23, s31, s32) in Bewegungsrichtung versetzt zueinander angeordnet und die den Schaltmagneten (s11, s12, s21, s22, s23, s31, s32) zugeordneten Hallsensoren (H1, H2, H3, H4) in einer senkrecht zur Bewegungsrichtung (2) sich erstreckenden Reihe (R) angeordnet sind.

6. Vorrichtung nach einem der vorhergehenden Ansprüche, wobei die Hallsensoren (H1, H2, H3, H4) in Bewegungsrichtung versetzt zueinander angeordnet und die Pole der diesen Hallsensoren (H1, H2, H3, H4) zugeordneten Schaltmagneten (s11, s12, s21, s22, s23, s31, s32) in einer senkrecht zur Bewegungsbahn sich erstreckenden Reihe angeordnet sind.

7. Vorrichtung nach einem der vorhergehenden Ansprüche, wobei im Wirkbereich jeder der Schaltmagnete (s11, s12, s21, s22, s23, s31, s32) zumindest einer der Hallsensoren (H1, H2, H3, H4) angebracht ist.

8. Vorrichtung nach einem der vorhergehenden Ansprüche, wobei im Wirkbereich einer der Schaltmagnete (s11, s12, s21, s22, s23, s31, s32) zwei Hallsensoren (H1, H2, H3, H4) vorgesehen sind.

9. Vorrichtung nach einem der vorhergehenden Ansprüche, wobei die Hallsensoren (H1, H2, H3, H4) derart im Wirkbereich der Schaltmagneten (s11, s12, s21, s22, s23, s31, s32) angeordnet sind, dass die Schaltbewegung von der Mittelstellung in die erste (T+) oder zweite Schaltstellung (T-) dreifach erfassbar ist.

10. Vorrichtung nach einem der vorhergehenden Ansprüche, wobei eine die Hallsensoren (H1, H2, H3, H4) aufnehmende Platine (4) in einem Gehäuse aufgenommen ist, an dem ein den Magneten (1) aufnehmendes linear verschiebbares Gleitelement angebracht ist.

11. Vorrichtung nach einem der vorhergehenden Ansprüche, wobei ein Abstand zwischen der Mittelstellung und der ersten (T+) und/oder zweiten Schaltstellung (T-) höchstens 20 mm, vorzugsweise höchstens 10 mm, beträgt.

12. Vorrichtung nach einem der vorhergehenden Ansprüche, wobei im Gehäuse ein elastisches Mittel zum Zwingen des Gleit elements in die Mittelstellung vorgesehen ist.

13. Vorrichtung nach einem der vorhergehenden Ansprüche, wobei an der Platine (4) angebrachte Kontaktelemente (5) zumindest einen im Gehäuse vorgesehenen Durchbruch zum Anschluss eines Steckers durchgreifen.
